(19) Europäisches Patentamt

European Patent Office

Office européen des brevets

(11) **EP 1 063 598 A2**

(12) **EUROPEAN PATENT APPLICATION**

(43) Date of publication:
27.12.2000 Bulletin 2000/52

(51) Int. Cl.⁷: **G06F 17/30**

(21) Application number: 00305216.4

(22) Date of filing: 20.06.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **21.06.1999 JP 17476799**
**21.06.1999 JP 17476899**

(71) Applicant:
**Matsushita Electric Industrial Co., Ltd.**
**Kadoma-shi, Osaka (JP)**

(72) Inventors:
• **Hirose, Atsushi**
**Sanda-shi, Hyogo-ken (JP)**
• **Umebayashi, Akito**
**Yokohama-shi, Kanagawa-ken (JP)**

• **Tanaka, Joji**
**Moriguchi-shi, Osaka-fu (JP)**
• **Monobe, Yusuke**
**Osaka-shi, Osaka-fu (JP)**
• **Yamamoto, Natsuki**
**Utsunomiya-shi, Tochigi-ken (JP)**
• **Uchikata, Hidekii**
**Hirakata-shi, Osaka-fu (JP)**
• **Sato, Akimasa**
**Fukuoka-shi, Fukuoka-ken (JP)**

(74) Representative:
**Dempster, Benjamin John Naftel et al**
**Withers & Rogers,**
**Goldings House,**
**2 Hays Lane**
**London SE1 2HW (GB)**

(54) **System and method for document management and document sharing**

(57)    The object of the invention is to settle various troubles referring to the management and sharing of electronic document.

The invention presupposes a document management system for copying mutually an electronic document between plural document management devices managing the database provided with both a document field for storing the electronic document and an index field for storing index information attached to the electronic document. In case of copying an electronic document in the personal computer 1200 to the other document management device, the document management means 1220 of the personal computer 1200 instructs to copy at least one item of the index information together with the copying instruction of the electronic document. Therefore, not only the document data but also the index information can be transferred at the time of the copying (the transfer), so that there may be no necessity for a user to re-set the index information in the document management system of the transfer destination.

FIG.1

## Description

This invention relates to the document management system and document management method for managing comprehensively electronic documents scattering in plural document management apparatuses.

A document management system is composed of plural document management devices (for example, a personal computer and etc.). When a user stores an electronic document in a document management device, the electronic document must be added with index information such as the document name, the folder name, the searching key, and so on by the user. And when thus stored electronic document needs to be copied to the other document management device, because of copying the document data only, a user of the other document management device as the copying-destination must add new index information of the document data to the same electronic document. The reason why the index information is not copied is that the structure of the document management device is different from each other.

By the way, it is preferable that plural users can use one electronic document so as to go on efficiently as the group work. The communization of electronic documents is known, as described hereafter, that electronic documents are to be stored in a common folder of a document storage device connected with plural document management devices via LAN.

Generally speaking, a user after preparing an electronic document makes a folder of the group, to which the user belongs, in the document storage deices, and then stores the electronic document attached with the index information. Meanwhile, a user who wants to display the electronic document executes the searching according to a keyword such as the document name or the folder name, by means of the dedicated searching software.

However, when an electronic document is transferred (copied) under the above configuration, since the object of transfer should be only the document data, the document management device of the transfer-destination must add new index information to said data. Specifically, in the conventional document management system, whenever an electronic document is copied, a user is always requested the troublesome operation for re-setting the index information.

And the conventional document sharing system needs troublesome operations, such as the preparation of folders, the processing of adding index information to the electronic document stored in the folder.

Considering the conditions in the conventional system as mentioned above, the invention is proposed and the objects of the invention are to solve many problems relating to the management and sharing of electronic documents.

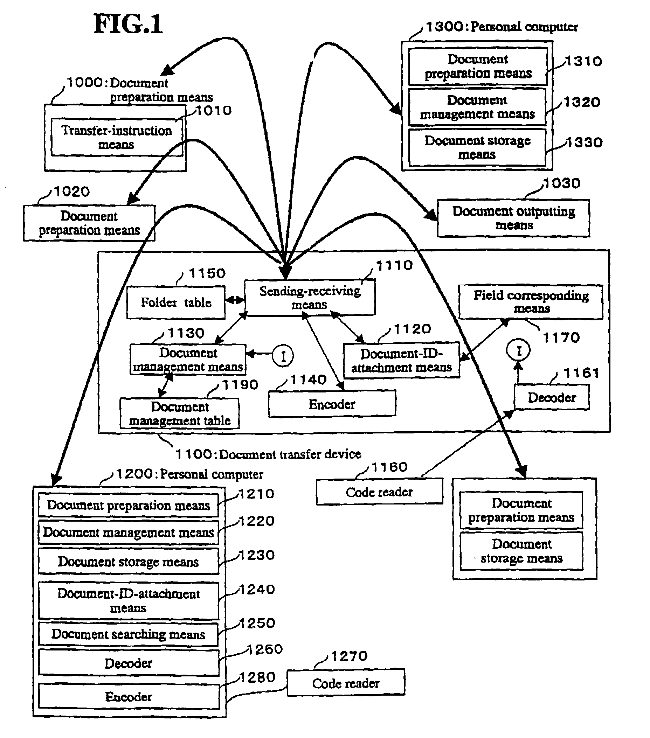

To achieve the above objects, the invention adopts the following means. Specifically, the invention presupposes a document management system, as shown in Fig.1, for copying mutually an electronic document between plural document management devices that manage respectively the database provided with a document field for storing the electronic document and the index field for storing the document attribute attached to the electronic document.

When an electronic document in the personal computer 1200 is copied to the other document management device, the document management means 1220 of the personal computer 1200 instructs to copy at least one specific item of index information while copying the electronic document (the field corresponding to at least one specific item of index information is arranged to be common to the databases of the copying-origin and the copying-direction). Accordingly, at the time of the transfer of an electronic document, the index information can be transferred together with the document data. Therefore, the user does not need to operate the troublesome work of re-setting the index information in the document management device of the transfer-destination.

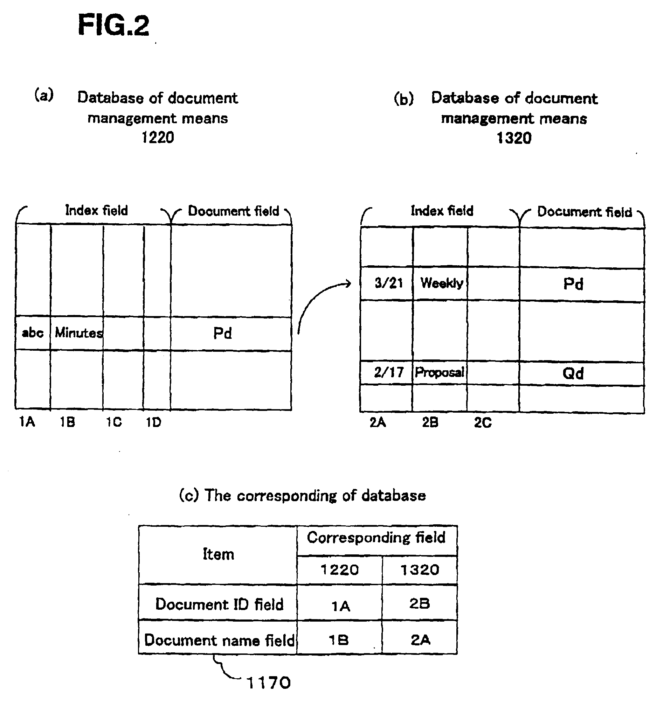

On the other hand, when the transfer of electronic document is executed between databases comprising a field structure different from each other, filed corresponding means 1170 is arranged to correspond a specific field of one database with a specific field of the other database (see Fig.2). Accordingly, it is possible to carry out the copying of an electronic document between databases with different field structure each other.

And if the specific field is a field for storing a global document ID that does not overlap in all electronic documents, it is possible to perform the omnidirectional data-transfer between plural document management devices. And at this time, the document ID for specifying the document does not overlap each other.

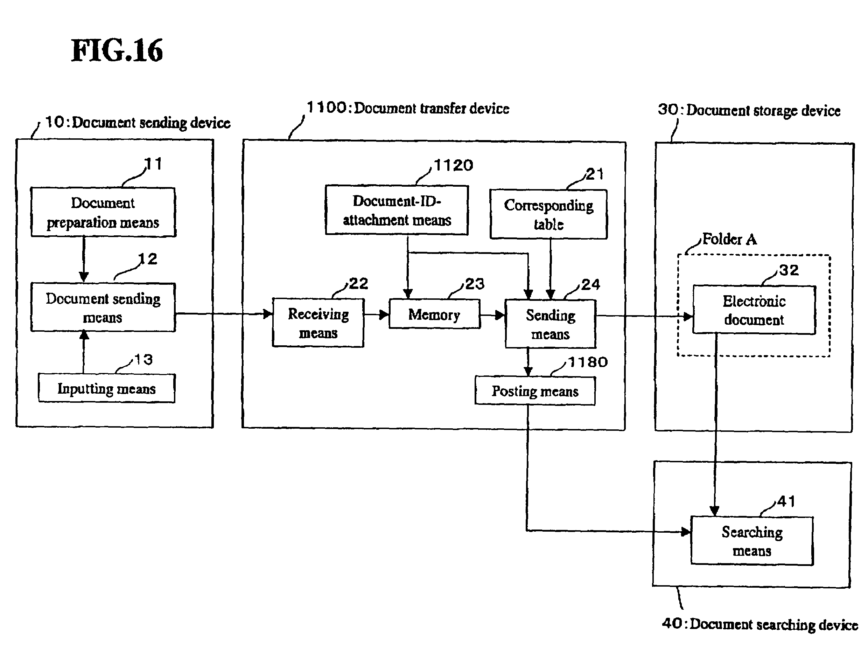

As shown in Fig. 16, it is also possible to apply the invention to a document sharing system comprising a document sending device 10 for sending an electronic document, a document storage device 30 for storing an electronic document sent from the document sending device 10, and a document searching device 40 for searching an electronic document stored in the document storage device 30.

Specifically, after adding a searching key to an electronic document sent from the document sending device 10 and storing it in the document storage device 30, the document transfer device 1100 posts to the document searching device 40 that the storing of the electronic document has been completed, together with the searching key. The posting method is not restricted particularly, but should utilize E-mail indicating URL (Uniform Resource Locator) including the global document ID. The searching key may utilize the document name of the electronic document, but prefers utilizing the global document ID, in order to avoid the overlap.

According to the above configuration, it is possible not only to store in the document storage device 30 the electronic document as the electronic document 32 common to the group by a simple operation, but also to search and display the stored electronic document 32 by a simple operation of clicking the URL indicated on the E-mail.

Fig.1 is a block diagram showing the document management system in the first embodiment of the present invention.

Fig.2 illustrates an example of the correlation between databases.

Fig.3 is a diagram showing the data structure of an electronic document.

Fig.4 is a schematic illustration of a sheet attached with a document ID mark.

Fig.5 is a block diagram showing the document management system in the second embodiment of the present invention.

Fig.6 illustrates an example of the copying of electronic document in the present invention.

Fig.7 illustrates an example of the copying of electronic document in the present invention.

Fig.8 illustrates an example of the copying of electronic document in the present invention.

Fig.9 illustrates an example of the searching of electronic document in the present invention.

Fig.10 illustrates an example of the searching of electronic document in the present invention.

Fig.11 illustrates an example of the searching of electronic document in the present invention.

Fig.12 illustrates an example of the searching of electronic document in the present invention.

Fig.13 illustrates an example of the copying of electronic document in the present invention.

Fig.14 illustrates an example of the copying of electronic document in the present invention.

Fig.15 illustrates an example of the copying of electronic document in the present invention.

Fig.16 is a block diagram showing the document sharing system adopting the present invention.

Fig.17 illustrates an example of the posted E-mail.

Fig.18 illustrates an example of the posted E-mail.

Fig.19 illustrates an example of inside configuration of the corresponding table 21.

The document management system of the present invention will be discussed hereafter with reference to the drawings.

The electronic document mentioned below includes not only a text file but also a binary file such as an image. The index information comprise an item such as a document name and a keyword, which a user prepares at the time of the document preparation, and the other item such as a document ID and the date, which a device prepares automatically.

(Embodiment 1)

Fig.1 is a block diagram showing the document management system in the first embodiment of the present invention.

The "document sending device" and the "document storage device" in the following description are defined that, when an electronic document is sent from the personal computer 1200 to the personal computer 1300, the personal computer 1200 is the document sending device, while the personal computer 1300 is the document storage device.

And every document sending device must be provided with means for instructing the transfer from each document transfer device to the document transfer device 1100, but the description regarding such transfer instruction will be omitted in the following description (including the referred drawings) for convenience sake.

First, the document preparation means 1310 is document preparation software of a personal computer 1300. A document data prepared here will be attached with a document ID and managed by the document management means 1320 in the personal computer 1300. And in case of transferring thus prepared document data to the personal computer 1200, said data is to pass through the document transfer device 1100.

But when the document data is managed by the document management means 1320, the document data must be attached with the document ID, and it means that the document management means 1320 includes the document-ID-attachment function. Additionally, a user sets the document name, the keyword for the searching, and etc. (the one which includes the document name, the keyword, and etc. is called "index information" in the following description), if necessary. In case the document ID and the document name have already been attached to a document data to be transferred according to the above procedure, it is arranged that the document management means 1320 of the personal computer 1300 instructs to transfer at least one item of the index information together with the document data. The document-ID-attachment means 1120 of the document transfer device 1100, after confirming that the document data to be transferred has been attached with the document ID, without starting the built-in document-ID-attachment function, transfers the document data and the index information to the personal computer 1200 without the conversion (if there is need for the data conversion, the data conversion is executed.).

In this case, if each database managed by the document management means 1320 and 1220 has the same field structure, the document data to be transferred, which is managed by the document management means 1320, can be stored in the document field of the database managed by the document management means 1220. Meanwhile, the document ID of said document data to be transferred, which is managed by the document management means 1320, can be stored in the document ID field of the database managed by the document management means 1220. And the document name of said document data to be transferred, which is managed by the document management means 1320, can be stored in the document name field of the database managed by the document management means 1220 (the one which includes the document name, the keyword, and etc. is sometimes called "index information" in the following description).

But mostly, the field structure of the above two databases are different from each other. In this case, the field corresponding means 1170 of the document transfer device 1100 is arranged to correspond a specific field of the database of the document management means 1320 with a specific field of the database of the document management means 1220. The specific fields are each document field and index information field of both databases.

That is to say, Fig2(c) shows the correlated conditions: the field corresponding means 1170 corresponds the filed 1A (see Fig.2 (a)) of the database of the document management means 1220 with the filed 2B (see Fig.2 (b)) of the database of the document management means 1320 as the document ID filed; and corresponds the filed 1B (see Fig.2 (a)) of the database of the document management means 1220 with the filed 2A (see Fig.2 (b)) of the database of the document management means 1320 as the document name filed.

According to the above, the present invention can perform the mutual data-transfer between plural document management devices. Therefore, there is a need preventing a case that the same document ID is issued by different document management devices. To achieve this object, the document-ID-attachment means 1120 of the document transfer device 1100 or the document-ID-attachment means 1240 of each document management device is arranged to attach a global document ID to every electronic document, so as not to overlap.

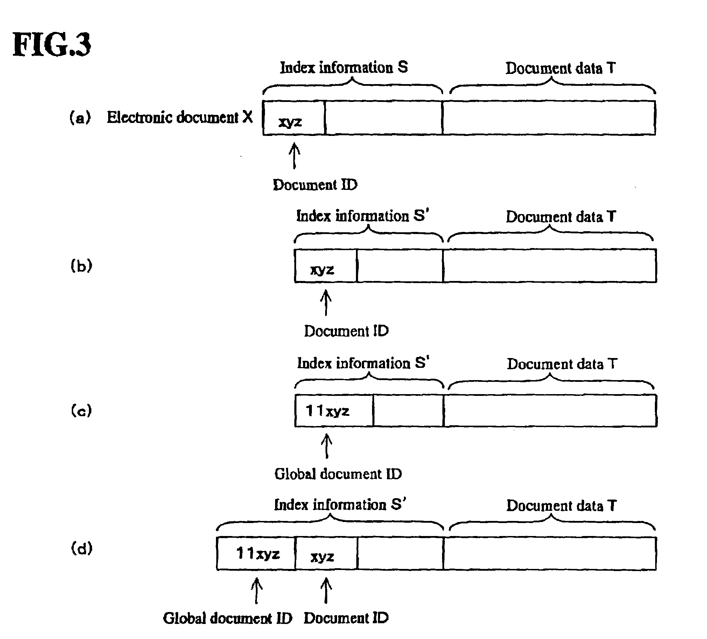

With reference to Fig.3, the processing made by the document-ID-attachment means 1120 of the document transfer device 1100 will be discussed in detail. In this embodiment, the electronic document X prepared in the document sending device is presumed as shown in Fig.3 (a) to comprise a document data T and an index information S written in the header or footer, said index information S including a document ID "xyz".

First, when the document ID "xyz" does not overlap with the document ID managed by the document storage device, the index information S' ( S'=S ) including the document ID "xyz" may be written into the header or footer in the document data instead of the index information S, as shown in Fig.3 (b). According to this arrangement, it is possible to transfer the electronic document attaching with the same document ID (without changing the document ID), which is effective for the document management in the document management system.

On the other hand, when there is a possibility that the document ID "xyz" overlaps with the document ID managed by the document storage device, the document-ID-attachment means 1120 or 1240 is to prepare a global document ID according to the following method.

Specifically, the general method for preparing a global document ID is to add an individual consecutive number issued by each document preparation means to said means' maker-ID and product-ID. Meanwhile, in the invention, the global document ID is prepared by adding a random number to a maker-ID and product-ID of each document preparation means. And to avoid as much accidental overlap of the random number as possible, the random number originates in a country number, document preparation time, IP address of the machine used at the document preparation, and etc.

By using the random number, the global document ID does not need to be managed in centralized under the tree structure (that is, with regularity). Accordingly not only the document-ID-attachment means 1120 of the document transfer device 1100, but also the document-ID-attachment means 1240 in the personal computer 1200 can attach a global document ID to every electronic document managed by the document management means 1220.

Moreover, because the global document ID uses the random number, there is an effect that the global document ID is hard to be influenced by the trouble with the source. Specifically, in case of adding a consecutive number to the global document ID, if the source of this consecutive number (a counter) breaks down, it occurs that the global document ID overlaps. Conversely, in case of adding a random number to the global document ID, even if the source of this random number (not a counter) breaks down, the overlap of the global document ID will not occur (that is to say, when the counter breaks down, the overlapped number prepares).

To attach the global document ID thus prepared as above to a specific electronic document, the document-ID-attachment means 1120 reads the index information S', and judges whether the global document ID has been attached or not. And if the global document ID has not been attached, the document-ID-attachment means 1120 writes the global document ID "11xyz" over the document ID "xyz" of the index information S' as shown in Fug.3(c), otherwise, newly adds the global document ID "11xyz" to the header or footer of the electronic document as shown in Fig.3 (d).

As discussed above, the present invention can perform the mutual data-transfer between plural document management devices, and at the same time, can attach the electronic document with a global document ID of a unique number in the system.

And since the system can perform the copying and transfer of the electronic document regardless of a type of the document management device or a kind of the application of document preparation, a user of the personal computer 1200, for example, can transfer and print out an electronic document located at the personal computer to the document outputting means 1030 via the document transfer device 1100.

And even when an electronic document is not transferred passing through the document transfer device 1100, if the device preparing the electronic document includes a function of attaching the global document ID (including the case of inquiring the function of the document transfer device 1100), whenever a new electronic document prepared by the document preparation means of the device is stored by the document storage means, the system can add an unique global document ID to the new electronic document while a user can set the document name and etc.

Under these arrangement, when the global document ID is attached to the electronic document prepared by the document preparation means of the specific device as described above, the document management means of the device selects the index information of the electronic document (including the global document ID that is added here) and sends the writing instruction to the document management means 1130 of the document transfer device 1100. And the document management means 1130 received said instruction is to write the index information into the document management table 1190.

On the other hand, if the device preparing the electronic document is not provided with the function of attaching the global document ID, when a new electronic document is prepared, the document-ID-attachment means of the device sends the request for obtaining the global document ID selecting the index information of the electronic document for the documented-ID-attachment means 1120 of the document transfer device 1100.

For instance, the document-ID-attachment means 1240 of the personal computer 1200 cannot prepare the global document ID, the document-ID-attachment means 1240 sends to the document transfer device 1100 the request for obtaining the global document ID selecting the index information. The document-ID-attachment means 1120 of the document transfer device 1100 receiving the instruction prepares the global document ID and sends it back to the document-ID-attachment means 1240 of the personal computer 1200, at the same time selects the index information including the global documents ID and then sends the request for writing to the document management means 1130 of the device 1100. The document management means 1130 receiving the request for writing is to write the index information into the document management table 1190 of the device 1100. Thereby, even if the document-ID-attachment means 1240 of the personal computer 1200 cannot prepare the global document ID, the electronic document prepared by the document preparation means 1210 of the personal computer 1200 can be attached with the global document ID and then store the document storage means 1230.

And while posting to the document management device of the transfer-destination the index information and the electronic document to be transferred, the document management means 1130 of the document transfer device 1100, that attached a new global document ID to the object electronic document to be transferred as described above, selects the index information, and sends the request for writing toward the document management means 1130. The document management means 1130 receiving the request is to write the index information into the document management table 1190.

Moreover, if the electronic document attached with the global document ID is transferred from the personal computer 1200 to the personal computer 1300, for example, the document management means 1130 of the document transfer device 1100 receives the index information of the electronic document to be transferred by means of the sending-receiving means 1110, and then writes the location of the electronic document (that is, the location on the personal computer 1300 of the transfer-destination) into the corresponding field of the prepared document management table 1190.

At this time, if the same electronic document remains in the personal computer 1200 of the transfer-origin, two locations regarding the same document are written into the document management table 1190, so that the document management table can manage the copying history. And even if the same electronic document did not remain in the personal computer 1200 of the transfer-origin, the original location that the electronic document had been located (that is, the location on the personal computer 1200) may be written into the document management table 1190, so that the document management table can record the moving history of the electronic document. And if an electronic document in a document management device is deleted, the document management means of the document management device sends the request for delete to the document transfer device 1100, and the document management means 1130 of the document transfer device 1100 receiving the request may write the delete history of the electronic document to the document management table 1190.

And the invention can attach every electronic document in the document storage device with a global document ID that does not overlap as possible as it can, so that it is possible to search the object electronic document from all electronic documents in the document management system.

The following explanation is the operation that a user of the personal computer 1200 searches an electronic document bearing a global document ID "01019382" and displays it on the screen of the personal computer 1200. And the case that the global document ID is the searching key is taken as an example in this embodiment, but the searching key may be the other index information such as a document name, a keyword, and etc.

First the user start the document searching means 1250 of the personal computer 1200. The started document searching means 1250 displays a screen for inputting the searching key, thereby the user inputs the global document ID "01019382" from a keyboard, and then sends the searching request for designating the global document ID "01019382" to the document transfer device 1100.

Next, the document management means 1130 receiving the searching request via the sending and receiving means 1110 of the document transfer device 1100 can specify the location of the electronic document with the global document ID "01019382" by referring to a document management table 1190 described above. And in this embodiment, it presupposes that an electronic document with the global document ID "01019382" is located at the personal computer 1300.

Accordingly, the document management means 1130 of the document transfer device 1100 sends to the personal computer 1300 a request for obtaining the electronic document with the global document ID "01019382", and the document management means 1320 of the personal computer 1300 received said request reads the electronic document with the global document ID "01019382" from the inside document storage means 1330 and then sends it back to the document management means 1130.

Therefore, when the document management means 1130 instructs the sending and receiving means 1110 to send the electronic document to the personal computer 1200, the sending and receiving means 1110 received said instruction transmits the electronic document to the personal computer 1200.

Finally, the electronic document with the global documents ID "01019382" is received by the document searching means 1250 of the personal computer 1200, and displayed on the screen by the document searching means 1250.

Since the invention of this embodiment presupposes that the searching field is all over the system (that is, all of the document storage devices), the processing was discussed with respect that, after adding a global document ID to an electronic document, the index information including the global document ID is written into the document management table 1190 of the document transfer device 1100. But when the searching field is restricted to the specific device, the attachment processing and the management processing of the global document ID can be omitted.

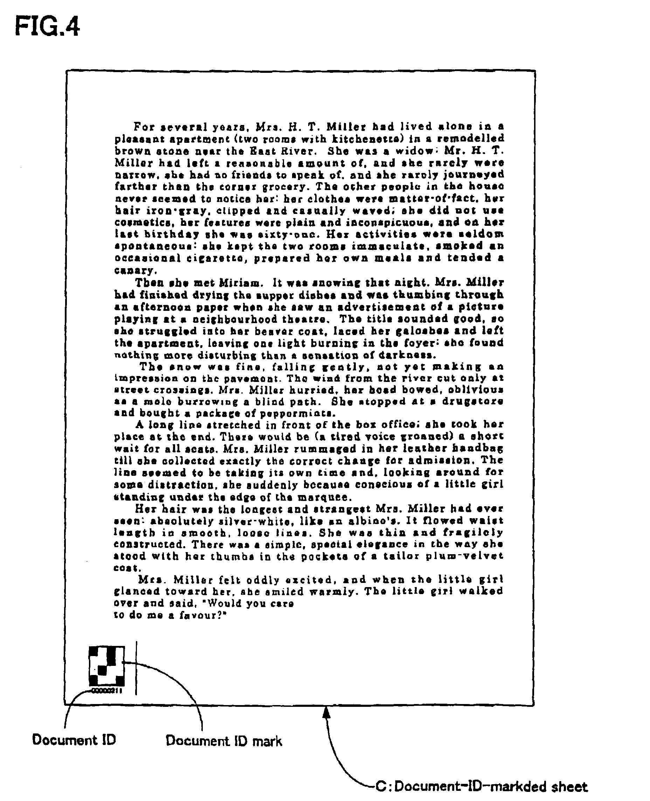

And in the above description, the keyboard, which the personal computer 1200 is provided with, is taken as an example of means for obtaining the global document ID that becomes the searching key. But the means for obtaining the global document ID is not restricted to this. For example, it may be arranged that a code reader 1270 that the personal computer 1200 is provided with reads the document ID attached to the document-ID-marked sheet C as shown in Fig.4, and a decoder 1260 that the personal computer 1200 is provided with decodes the document ID mark, thereby the global document ID can be obtained. Accordingly, it is possible to prevent the wrong input of a global document ID.

The method of preparing the document-ID-marked sheet C is that, at the time of receiving the instruction of printing the electronic document bearing the specific global document ID from the personal computer 1200, the encoder 1280 of the personal computer 1200 or the encoder 1140 of the document transfer device 1100, after encoding the global document ID to a document ID mark, may attach the document ID mark to a specific position (for example, bottom left in the first page) of the electronic document (since these technique is well-known, the detailed explanation will not be described here).

Moreover, in the above description, the personal computer 1200 is taken as an example of a device for searching the electronic document (which is called a "document searching device" hereinafter), but only the personal computer 1200 is not a document searching device. Specifically, the device, whichever provided with the document searching means 1250 included in the personal computer 1200, (such as the personal computer 1300, the document transfer device, and so on), can be the document searching device. And it is needless to say that even the other device (for example, the document transfer device 1100), if it is provided with the code reader 1160 and the decoder 1161, can obtain the global document ID for the searching key from the document-ID-marked sheet C.

In the above explanation, the configuration is arranged that the electronic document, whenever it is transferred, always is to pass through the document transfer device 1100. But each function (each means) of the document transfer device 1100 may be provided with either one of the document management devices in the system (for example, the personal computer 1200 and so on). Therefore, since the document transfer device does not intervene in the data transfer, it is possible to shorten the time of the transfer processing.

(Embodiment 2)

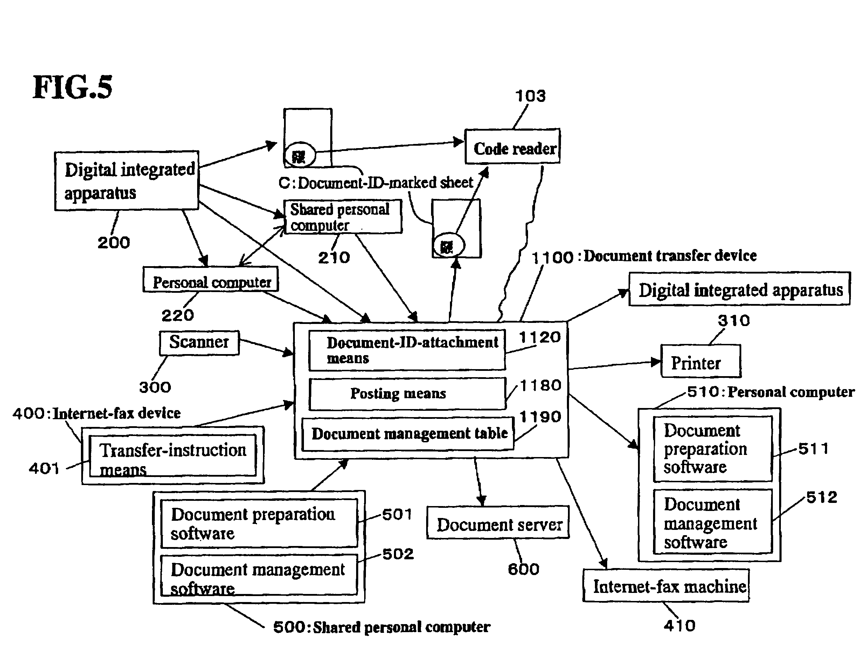

Fig.5 is a block diagram showing the document management system in the second embodiment, and the configuration will be discussed regarding the different points from that of the first embodiment.

A digital integrated apparatus 200, that is a device to carry out the compact space by integrating a scanner, a printer, a facsimile machine, and etc. with a digital copying machine, can prepare an electronic document by reading original images, manage the electronic document according to a document ID independently, and print the document ID of the specific electronic document as a document-ID-marked sheet C. And after obtaining the document ID by decoding the document ID mark printed on the document-ID-marked sheet C, the digital integrated apparatus 200 can extract and print the electronic document corresponding to the document ID, said document is managed personally. The electronic document in the digital integrated apparatus 200 can be copied to a shared personal computer 210 and a personal computer 220 connected via LAN (Local Area Network). The shared personal computer is defined as a personal computer used by plural users, that is to say, which is provided with common folders.

And an internet-fax device 400 prepares a document data (TIFF image) at the facsimile receiving. Thus prepared document data is attached to an internet-mail without adding a document ID, and then transferred to the document transfer device 1100. Said transfer to the document transfer device 1100 is executed by the transfer-instruction means 401 of the internet-fax device 400, which will be described later.

The document data prepared by the scanner 300 (monochrome or color image) is stored in the memory of the document transfer device 1100 without adding the document ID in the same as the document data prepared by the internet-fax device 400. The document data prepared by the document preparation software 501 of the shared personal computer 500 is to be managed independently by the document management software 502 after adding the document ID.

The printer 310 is a color printer in ordinary use, and the document server 600 is a document server shared with many users via network.

In the system installing those various document management devices, the conditions capable of transferring a document data from each document management device via the document transfer device 1100 are the same as in the first embodiment.

The case that the internet-fax device 410 and the personal computer 510 are preset as a transfer-destination in the internet-fax device 400 will be discussed as an example.

First, the internet-fax device 400 prepares a document data (TIFF image) at the time of the facsimile receiving, which has been discussed in the above.

The transfer-instruction means 401 of the internet-fax device 400 designates both the internet-fax device 410 and the personal computer 510 as a transfer-destination, attaches thus prepared document data to an internet-mail, and transfers the internet-mail to the document transfer device 1100. Thereby, the document transfer device 1100, while transferring the internet-mail to the internet-fax device 410, adds a global document ID to the document data attached to the internet-mail and transfers them to the personal computer 510. The reason that the global document ID is not attached to the document data to be transferred to the internet-fax device 410 is that the document data is only printed on a recording paper and does not need to be managed.

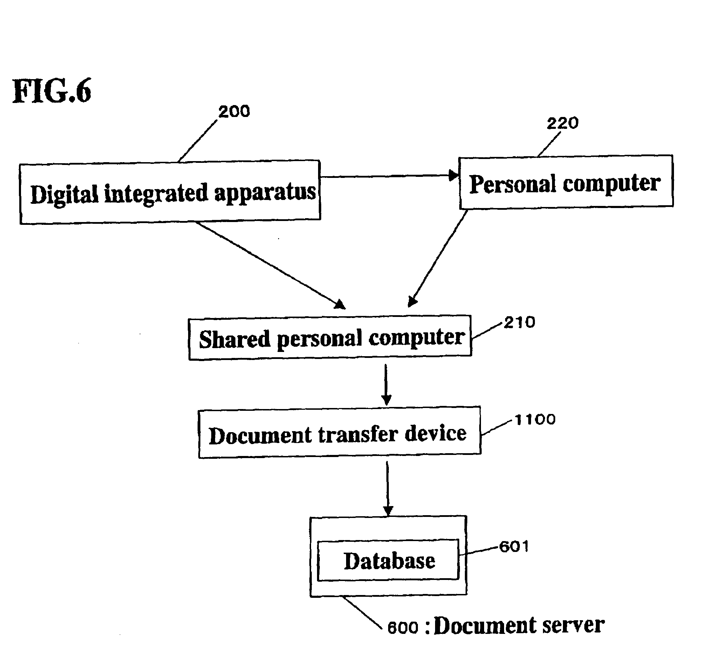

The utilized method of the digital integrated apparatus 200 connected with the shared personal computer 210 and the personal computer 220 via LAN will be discussed as follows with reference to Fig.6.

First, an electronic document prepared by the digital integrated apparatus 200 is stored in the shared personal computer 210 directly or passing through the personal computer 220, and the shared personal computer 210 manages the stored electronic document by the hierarchical classification using folders. The hierarchical classification is that, preparing some folders under a reference folder, the electronic document is classified and stored in one of said folders according to the content or purpose.

In order to transfer an electronic document to the document server 600 provided with a database 601 of different field structure from the database 211 of the shared personal computer 210, it may be arranged to preset in the document transfer device 1100 a folder table 1150 (see Fig.1) for corresponding a folder of the document sending device with a folder of the document storage device. Thereby it is possible to automatically transfer and store the electronic document stored in the specific folder in the shared personal computer 210 to a corresponding folder in the document server 600.

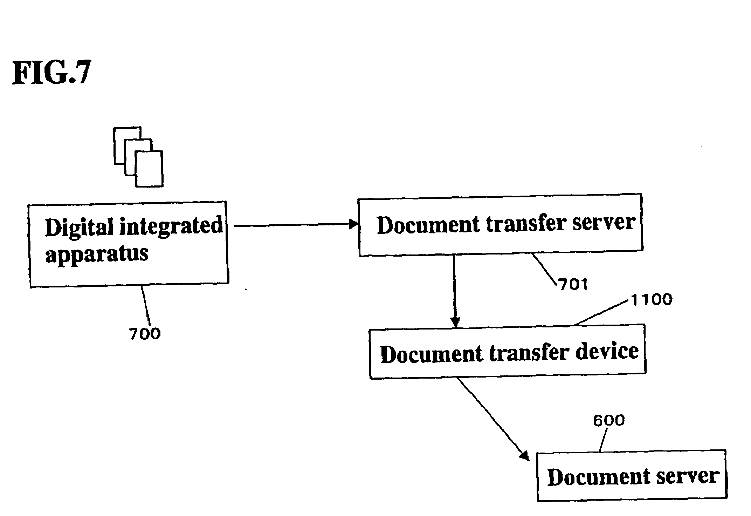

And furthermore, an electronic document prepared in the other digital integrated apparatus 700 can be transferred and stored to the document transfer device 1100 via the document transfer server 701, and said document also can be transferred to document server 600 after adding the document ID, as shown in Fig.7.

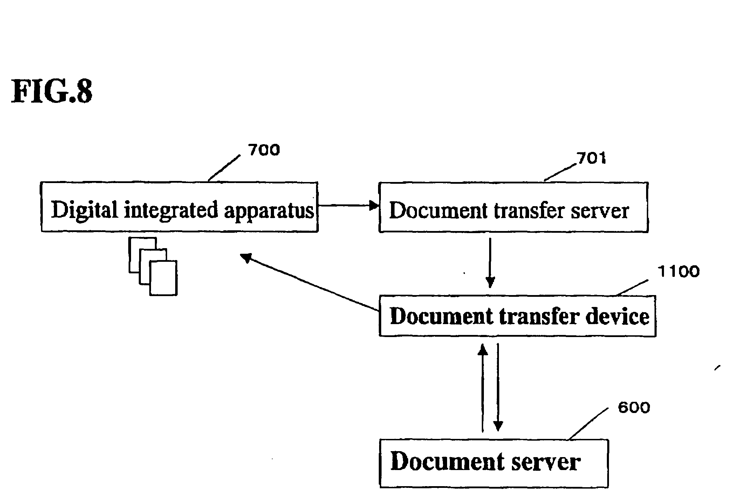

As shown in Fig.8, after the digital integrated apparatus 700 prepares an image by scanning the document-ID-marked sheet C, said image can be transferred to the document transfer device 1100 via document transfer server 701, so that the document transfer device 1100 can specify the document ID by decoding the document ID mark included in the image, and can fetch the electronic document of the document ID from the document server 600 and transfer it to the digital integrated apparatus 700.

(Embodiment 3)

By the way, in order to search an object electronic document from all the electronic documents in the document management system, it is necessary to input a global document ID from a keyboard or code reader provided in the document searching device. This means that a user of the document searching device cannot search an object electronic document unless obtain the index information (the global document ID, the document name, and etc.) of said document.

Therefore, the invention of this embodiment as shown in Fig.5 is to be provided with posting means 1180 for posting to a user at least one item of the index information, and the configuration will be discussed regarding the different points from that of the first and second embodiments.

First, the posting means 1180 provided in the document transfer device 1100 is for posting to a user the information including the global document ID, the location, and etc., that is sent as an electronic file. When a user of the document transfer device 1100 instructs the posting means 1180 to post electronic documents stored for a specific period (for example, from 2000/05/28 to 200/06/03), the posting means 1180 received said instruction specifies the electronic documents stored for said period by referring to the document management table 1190, and prepares an electronic file storing the index information. If the electronic file thus prepared is stored in such as a floppy disc, the document searching device or the document transfer device 1100 reads the contents of the floppy disc. Thereby, it is possible to search the electronic documents stored for said period. By referring to the printed matter on which the content of the floppy disc is printed from the document outputting means 1030, it is also possible to search the electronic document stored for the period.

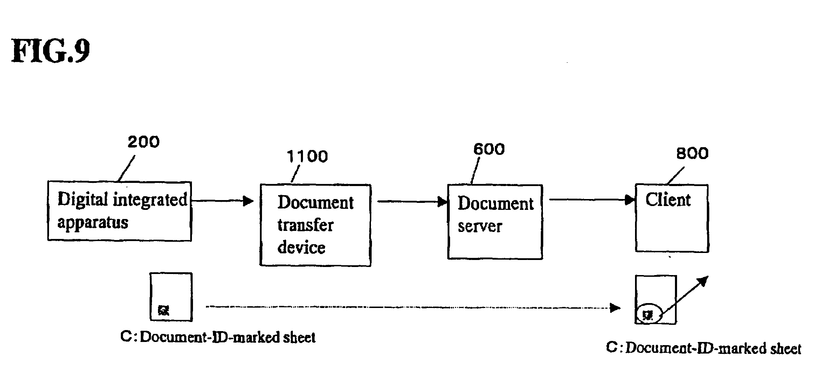

And as shown in Fig.9, a printer provided in the digital integrated apparatus 200 can be the posting means. Specifically, after transferring an electronic document prepared by the printer of the digital integrated apparatus 200 to the document server 600 via the document transfer device 1100, the digital integrated apparatus prints the document-ID-marked sheet C of the electronic document from the printer, and sends it to a user of the client 800 of the document server 600. Thereby the user of the client 800 can input from the keyboard the global document ID printed on the document-ID-marked sheet C, or the code reader read the document ID mark printed on the document-ID-marked sheet C, so that it is possible to search the electronic document in the document server 600. In this case, it is the document management means 1130 of the document transfer device 1100 or the document management means not shown of the document server 600 (which function is the same as the document management means 1130) that specifies the electronic document that is an object of the searching.

And the method for transferring the document-ID-marked sheet C to a user of the client 800 is not restricted definitely, but it is only that the user could obtain the document-ID-marked sheet C. And human may intervene in the transfer method.

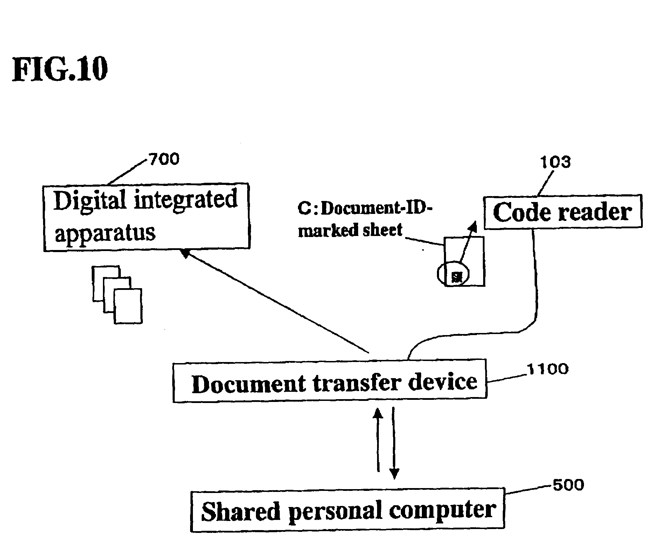

As shown in Fig.10, after the code reader 103 of the document transfer device 1100 reads the document ID mark printed on the document-ID-marked sheet C, the searching is performed according to the global document ID read in such way. In a result, in case of determining that the electronic document with the global document ID is located in the shared personal computer 500, it is possible to transfer the electronic document in the shared personal computer 500 to the digital integrated apparatus 700 and then print out it there.

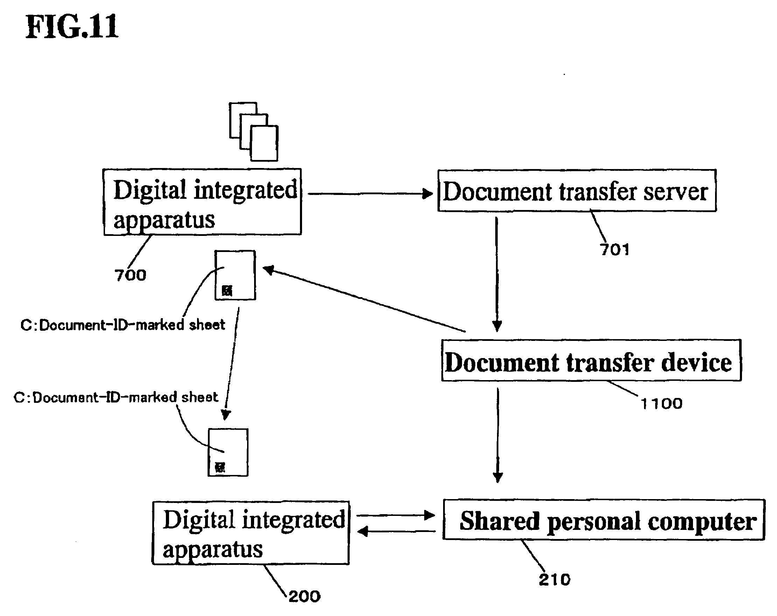

In Fig.11, an electronic document prepared in the digital integrated apparatus 700 is added with a global document ID by the document transfer device 1100 after being transferred to the document transfer device 1100 via document-transfer server 701, and is re-transferred to the digital integrated apparatus 700, and then printed out as the document-ID-marked sheet C. After that, if the document-ID-marked sheet C is sent to a user of the digital integrated apparatus 200, the user reproduces the global document ID reading the document-ID-marked sheet C by the digital integrated apparatus 200. And first, the user performs the searching in the digital integrated apparatus 200 according to the global document ID. If the corresponding electronic document cannot be found, it is possible to proceed to the searching in the shared personal computer 210 connected via LAN. And the method for sending the document-ID-marked sheet C to the user of the digital integrated apparatus 200 is not also restricted in particular as in the same way as the case of the user of the client 800.

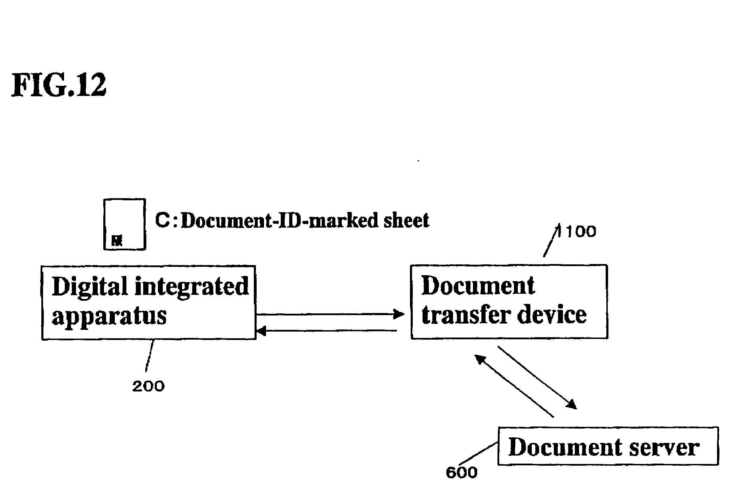

Likewise, as shown in Fig.12, it is possible to perform the searching in the document server 600 by transferring the document ID mark corresponding to the document-ID-marked sheet C via the document transfer device 1100 after the digital integrated apparatus 200 reads the document-ID-marked sheet C.

Here is explained that, with reference to Fig.5 and Fig.9 to Fig.12, the invention of this embodiment can perform the mutual transfer of an electronic document attached with a global document ID between those of a digital integrated apparatus, a personal computer, and a server (the document server 60 or the document transfer server 701). And it is needless to say that such transfer processing can be performed between other document processing apparatuses.

(Embodiment 4)

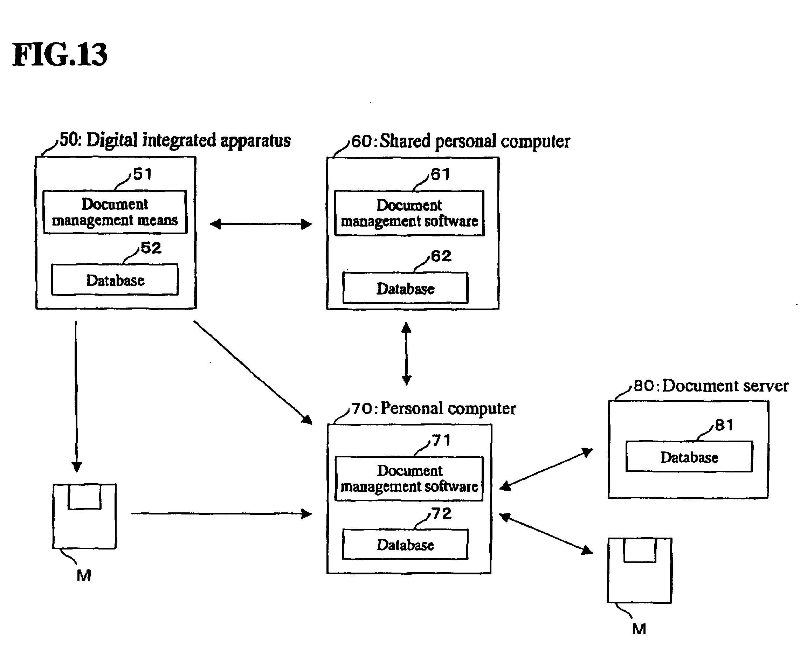

The preferred embodiment of the invention will be discussed according to Fig. 13 to Fig. 15.

In the digital integrated apparatus 50 shown in Fig. 13, said apparatus installing the same function as the digital integrated apparatus in Fig.5, after the document management means 51 of said apparatus attaches a document ID to an electronic document prepared by reading original image, the electronic document is stored and managed by the database 52. Both the shared personal computer 60 and the personal computer 70 are utilized by being connected with the digital integrated apparatus 50, and an electronic document prepared by the digital integrated apparatus 50 can be copied to the shared personal computer 60 and the personal computer 70. It is also possible to copy to the shared personal computer 60 the electronic document that has been copied to the personal computer 70. Likewise, It is also possible to copy to the personal computer 70 the electronic document that has been copied to the shared personal computer 60. Each personal computer 60 and 70 is provided with the document management software 61 and 71 respectively. The document management software 61 and 71 respectively stores and manages the electronic document by each database 62 and 72.

The database 72 of the personal computer 70 manages two items of the storage folder and the classification in addition to the same item (for example, the document name, and etc.) as the database 52 of the digital integrated apparatus 50. And the database 62 of the shared personal computer 60 manages two items of the user and the group in addition to the same item as the database 72 of the personal computer 70.

Since the above system adopting the database having many common items regarding the management items is easy to copy the electronic document together with the index information between databases, it is effective in the communization, the carrying, and the moving of the electronic document by using the document server 80 or the removable media M.

That is to say, each of the document management means 51, the document management software 61, and the document management software 71 recognizes the field structure of database in others each other previously, and it means that said means and software has been already provided with the function of corresponding these field structures. Accordingly, the personal computer 70 can succeed all of the index information set by the digital integrated apparatus 50, and the shared personal computer 60 can succeed all of the index information set by the personal computer 70. On the other hand, of the index information set in the shared personal computer 60, the other items except for both the user and the group can be succeeded by the shared personal computer 70. Of the index information set in the personal computer, the digital integrated apparatus 50 can succeed the other items except for the storage folder and the classification.

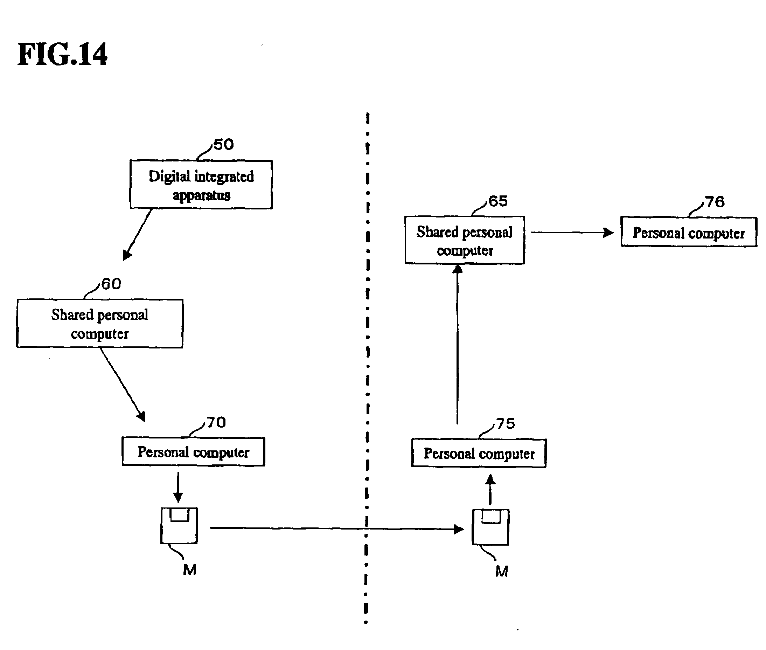

The copying processing between those of the digital integrated apparatus 50, the personal computer 60 and 70 can be carried out by not only the data-transfer via network, but also passing through the removable media M. Specifically, as shown in Fig.14, after the electronic document in the digital integrated apparatus 50, together with the index information, is transferred and copied to the personal computer 70 passing through the shared personal computer 60, the electronic document is copied to the removable media M together with the index information. And the user carries the removable media M to a remote place, and after making the personal computer 75 read the contents, the contents is copied to the personal computer 76 passing through the shared personal computer 65. Accordingly, even if the user of the personal computer 76 does not carry the removable media M, the user can perform the document searching according to the index information copied together with the electronic document.

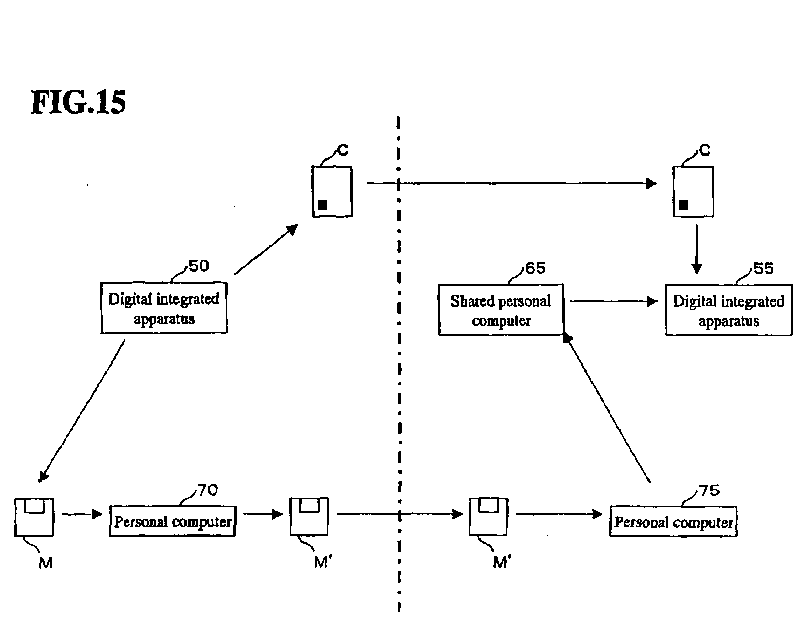

The digital integrated apparatus adopting the present invention is provided with an encoder for encoding the document ID to the document ID mark in order to prepare the document-ID-marked sheet C, and a decoder for conversely decoding the document ID by reading the document ID mark printed on the document-ID-marked sheet C. Therefore, as shown in Fig.15, the electronic document in the digital integrated apparatus 50 can be copied together with the index information to the shared personal computer 65 at the remote place, passing through the removable media M, the personal computer 70, the removable media M', and the personal computer 75. Meanwhile, the document-ID-marked sheet C of the electronic document copied as above may be prepared by the digital integrated apparatus 50 and then sent to the remote digital integrated apparatus 55. According to the above configuration, after the digital integrated apparatus 55 at a remote place reads the document ID mark printed on the document-ID-marked sheet C, it is possible to perform the searching of the electronic document bearing the document ID corresponding to the document ID mark (that is, the electronic document copied to the shared personal computer 65 as above).

And if the personal computer 75 is provided with the decoder and the code reader, it is needless to say that the prescribed searching can be performed by the personal computer 75 (that is, the searching of the electronic document copied to the shared personal computer 65).

(Embodiment 5)

It's preferable that the electronic documents so as to perform the group work efficiently are used by plural users in common. The term "common" is defined that the document management system in the invention is provided with a document storage device connected with plural document management devices via LAN, and electronic documents are to be stored in a common folder of the document storage device.

Specifically, the user who prepares in the storage device an electronic document makes a folder for the group, which the user belongs to, and stores there the electronic document with adding the index information. On the other hand, another user who wants to display the electronic document performs the searching according to the key such as a document name or a folder name by means of the dedicated searching software. This is a general method.

To carry out the above searching, however, it needs a troublesome operation such, as the preparation of folders, and the processing for attaching the index information to the electronic document stored in said folder.

In the above document sharing system, a document management device, if it is not allowed to access to the document storage device, cannot be a document sending device or a document searching device. That is, there is a problem in the conventional techniques that an electronic document prepared by an outside document management device cannot be stored in the document storage device or that an electronic document stored in the document storage device cannot be searched by an outside document management device.

And in the above-mentioned document sharing system, when sharing an electronic document attached to E-mail sent from the third party (an user who does not belong to any group) with a group, the user receiving the E-mail must store the electronic document in the document storage device according to the above complicated procedures.

Accordingly, the invention in this embodiment is arranged as shown in Fig.16 that the document transfer device 1100 provided with the document-ID-attachment means 1120 intervenes between the document sending device 10 and the document storage device 30. The configuration will be discussed hereafter together with the operation.

First, when a user of the document sending device 10 attaches an electronic document prepared by the document preparing software to the E-mail and transmits it to the group A, the E-mail is stored in the memory 23 via the receiving means 22 of the document transfer device 1100.

And in this embodiment, the document preparation software is taken as an example of the document preparation means 11 of the document sending device 10, but the document preparation means 11 may be a scanner connected with the device 10. The file-attachment & transfer function of E-mail software is taken as an example of the document sending means 12 of the document sending device 10, but the document sending means 12 may be a file transfer function utilizing FTP (File Transfer Protocol).

Thereby, the document-ID-attachment means 1120 of the document transfer device 1100, after adding a searching key to the electronic document attached to the E-mail, instructs the sending means 24 to store the electronic document in a specific folder of the document storage device 30.

The above searching key means a keyword utilized for the searching of electronic documents, that is, information for specifying an object electronic document. Accordingly, the searching key may use index information (an document name) of the electronic document, but prefers the global document ID so as to prevent the overlap.

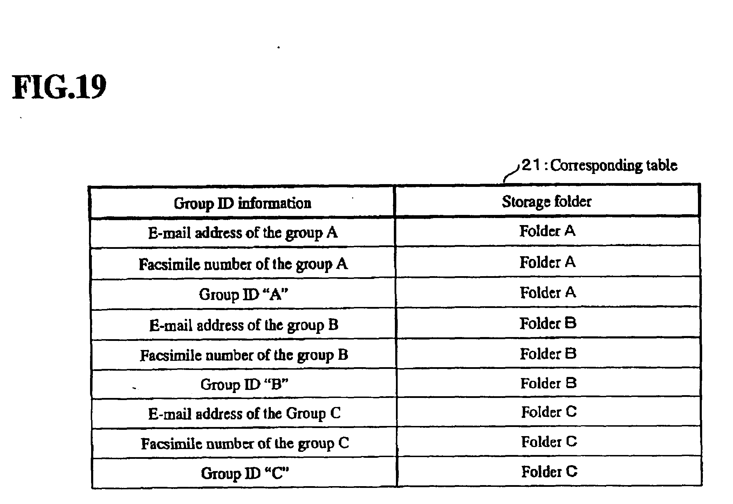

The sending means 24 can specify a folder for storing the electronic document from plural folders prepared every group in the document storage device 30, referring to the corresponding table 21 stored in the storage means (not shown). The corresponding table 21 is a table as shown in Fig. 19 that information for specifying the group (which is called "group ID information") is correlated with the stored folder of the electronic document in advance, and in the invention the destination information of the E-mail (the E-mail address of the Group A) is equivalent to the group ID information.

Therefore the sending means 24 can specify the folder A corresponding to the E-mail address of the group A. And after completing the storing of the electronic document 32 into the folder A, the sending means 24 posts the notice to the posting means 1180. The posting means 1180 receiving the notice posts to all members of the group A together with the global document ID the notice that the storing of the electronic document 32 has been completed.

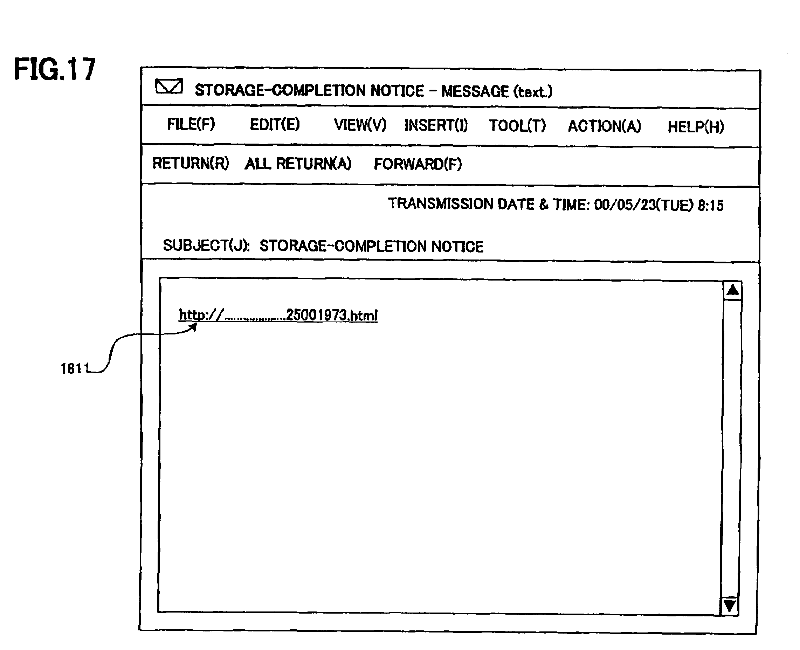

The posting means 1180 may be provided on the side of the document storage device 30, instead of on the side of the document transfer device 1100. The posting method is not restricted particularly, but prefers adopting the E-mail indicating URL (Uniform Resource Locator) including the global document ID (if the posting means 1180 recognizes the E-mail address of all members, that is, the document transfer device 1100 presupposes to be provided with address book (not shown). According to the above configuration, the E-mail with the contents as shown in Fig.17 can be posted to all members of the group A. When a member of the group A clicks by the mouse the URL indicated in the E-mail, "http://...25001973.html" 1181 (that is, executes the searching means 41 of the document searching device 40), the web-browser such as the internet explorer starts, for example, and displays the electronic document 32 of the global document ID "25001973" included in URL "http://...25001973.html" 1181.

As discussed above, the invention in the preferred embodiment is arranged that by a simple operation of transferring an E-mail attached with an electronic document, the electronic document can be stored in the document storage device 30 as a group-shared electronic document 32. And furthermore the electronic document 32 thus stored can be searched and displayed by a simple operation of clicking URL indicated in the E-mail.

And in this embodiment of the invention, the document management device, if installing the E-mail software and the web-browser, can be the document sending device 10 or the document searching device 40. That is to say, after an electronic document prepared by the outside document management device is attached to an E-mail, said electronic document can be stored in the document storage device 30. And the electronic document 32 stored in the document storage device 30 can be displayed by web-browser installed in the outside document management device, too.

In this embodiment of the invention, the personal computer installing the E-mail software is taken as an example of the document sending device 10, but the document sending device 10 may be a device capable of transferring an electronic document together with the group ID information.

For example, if a facsimile device is used as the document sending device 10, a facsimile number of the destination included in the facsimile data sent by the facsimile device can be group ID information. In this case, the document transfer device 1100 presupposes to be provided with the converting means (not shown) for converting the facsimile data to the data of the personal computer in the same as in the first embodiment.

It a digital integrated apparatus is used as the document sending device 10, it may be arranged that the group ID such as "A" is inputted from the inputting means 13 of the digital integrated apparatus and then the document sending device 12 sends the group ID together with the electronic document. Therefore it is possible to make the group ID the group ID information.

Moreover in the embodiment, it is arranged that, as soon as the storing of the electronic document 32 is completed, the posting means 1180 starts. The start timing of the posting means 1180 is not limited to this. It may be arranged that the posting means 1180 starts and posts at the specific time, or at the time of receiving the instruction from the searching terminal 40.

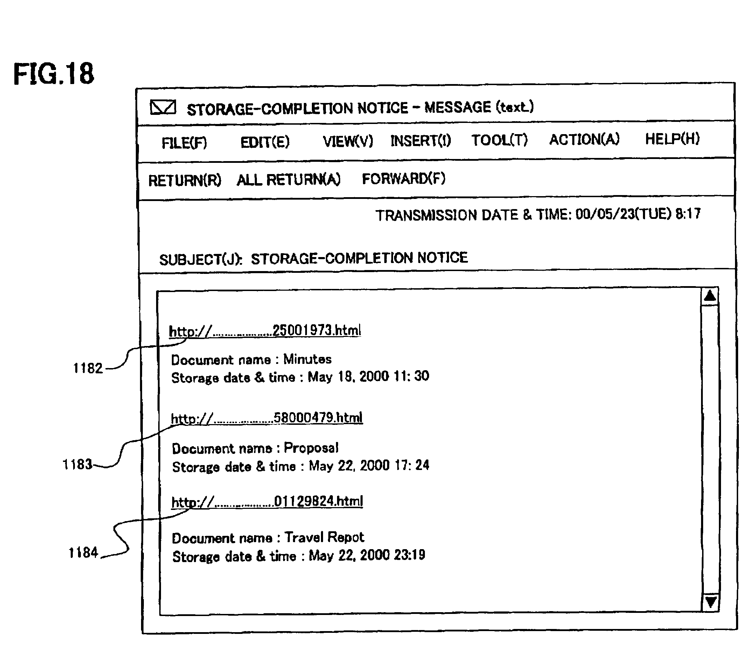

And the global document ID is arranged to be posted together with the notice that the storing of the electronic document 32 is completed, but it is preferred to posting not only the global document ID, but also the index information (the document name). According to such configuration, it is easy to find out an object URL if plural E-mails indicating plural URL 1182 to 1184 is posted, as shown in Fig. 18.

In the above, when a user clicks with a mouse URL "http://...25001973.htm." 1181 indicated in the E-mail, the web-browser displays the electronic document 32 of the global document ID "25001973" included in the URL "http://...25001973.htm." 1181. This technique is not explained in the embodiment, because it is well-known technique. That is to say, to carry out the display of the electronic document 32 as above, the document transfer device 1100 may convert the electronic document from the document sending device 10 to the format capable of searching by the web-browser (for example, HTML or XML, and so on) and then store it in the document storage device 30. Otherwise, the method can be also adopted that the document outline information changes to the HTML document style and the link information to the electronic document 32 is embedded in the HTML document.

In this embodiment, there is no need that the document transfer device 1100 and the document storage device 30 are provided separately. By using one device including the functions of these devices 1100 and 30, it is possible to obtain the same effect.

The invention was discussed under the conditions that an electronic document prepared by a user is shared with all member of the group. But if the group consists of only one member, the invention can be available for personal use.

And it is not necessary to asking whether the user of the document sending device 10 is a member of either group or the third party.

**Claims**

1. A document management system for copying mutually an electronic document between plural document management devices that manage the database provided with a document field for storing the electronic document and an index field for storing index information attached to the electronic document, which comprising:

   document management means for instructing to copy at least one specific item of the index information while copying the electronic document.

2. The document management system according to Claim 1, wherein databases of the copying-origin and the copying destination are provided with a common field corresponding to at least one item of the index information, respectively.

3. The document management system according to Claim 2, which comprising filed corresponding means, in case of copying an electronic document between databases with different field structure each other, filed corresponding means for corresponding a specific field of one database with a specific field of the other database.

4. The document management system according to Claim 3, wherein the specific field is a field for storing a global document ID that does not overlap in all electronic documents.

5. The document management system according to Claim 3, which comprising document management means for writing into a document management table at least one of the copying history of the electronic document, the moving history of the electronic document, and the delete history of the electronic document.

6. The document management system according to Claim 4, which comprising document-ID-attachment means for judging whether a global document ID is attached to the electronic document, if the ID is not attached, preparing the global document ID and attaching it to the electronic document.

7. The document management system according to Claim 6, wherein the document-ID-attachment means, at the time of receiving a request for obtaining a global document ID, adds a global document ID to the electronic document corresponding to the request for obtaining the global document ID.

8. The document management system according to Claim 4, which comprising posting means for posting to a user at least one item of the index information by printing it on a recording paper.

9. The document management system according to Claim 4, which further comprising:

inputting means for inputting at least one item of the index information; and
document searching means for searching an electronic document corresponding to the inputted information.

10. The document management method for copying mutually an electronic document between plural document management devices that manage the database provided with a document field for storing the electronic document and an index field for storing index information attached to the electronic document, which comprising:

instructing to copy at least one specific item of the index information while copying the electronic document.

11. A document sharing system provided with a document sending device for sending an electronic document, a document storage device for storing the electronic document sent from the document sending device, and a document searching device for searching the electronic document stored in the document storage device, comprising

after an electronic document sent from the document sending device is added with a searching key and stored in the document storage means,
a document transfer device for posting to the document storage means that the storing of the electronic document has been completed, together with the searching key.

12. The document sharing system according to Claim 11,
wherein the document sending device sends to the document transfer device the group ID information together with an electronic document,

the document transfer device posts to all members of the group specified based on the group ID information that the storing of the electronic document has been completed.

13. The document sharing system according to Claim 11, wherein the document transfer device posts that the storage of the electronic document has been completed, by means of E-mail indicating URL including a searching key.

14. The document sharing system according to Claim 11, wherein the document transfer device posts that the storage of the electronic document has been completed, by means of E-mail indicating index information together with URL including a searching key.

15. The document sharing system according to Claim 11, wherein the searching key is a global document ID that does not overlap in all electronic documents stored in the document storage device.

16. The document sharing system according to Claim 11, wherein the document transfer device converts an electronic document sent from the document sending device in a format capable of searching on web-browser and then stores it in the document storage device.

17. The document sharing system according to either one of Claim 11 to 16, wherein the document storage device, instead of the document transfer device, posts that the storage of the electronic document has been completed.

18. A document sharing method for the document sharing system provided with a document sending device for sending an electronic document, a document storage device for storing the electronic document sent from the document sending device, and a document searching device for searching the electronic document stored in the document storage device, comprising:

adding a searching key to an electronic document,
storing the electronic document attached with the searching key in the storage device, and
posting the completion of the document-storage to the document searching device together with the searching key.

# FIG.1

1300 : Personal computer

| Document preparation means | 1310 |
| Document management means | 1320 |
| Document storage means | 1330 |

1000 : Document preparation means

1010
Transfer-instruction means

1020
Document preparation means

1030
Document outputting means

1150
Folder table

1110
Sending-receiving means

Field corresponding means

1130
Document management means — I

1120
Document-ID-attachment means

I — 1170

1161
Decoder

1190
Document management table

1140
Encoder

1100 : Document transfer device

1160
Code reader

Document preparation means

Document storage means

1200 : Personal computer

| Document preparation means | 1210 |
| Document management means | 1220 |
| Document storage means | 1230 |
| Document-ID-attachment means | 1240 |
| Document searching means | 1250 |
| Decoder | 1260 |
| Encoder | 1280 |

1270
Code reader

# FIG.2

(a) Database of document
management means
1220

(b) Database of document
management means
1320

| Index field | | | | Document field |
|---|---|---|---|---|
| | | | | |
| | | | | |
| abc | Minutes | | | Pd |
| | | | | |
| 1A | 1B | 1C | 1D | |

| Index field | | | Document field |
|---|---|---|---|
| | | | |
| 3/21 | Weekly | | Pd |
| | | | |
| 2/17 | Proposal | | Qd |
| | | | |
| 2A | 2B | 2C | |

(c) The corresponding of database

| Item | Corresponding field | |
|---|---|---|
| | 1220 | 1320 |
| Document ID field | 1A | 2B |
| Document name field | 1B | 2A |

1170

# FIG.3

(a) Electronic document X

Index information S

Document ID → | xyz |

Document data T

(b)

Index information S'

Document ID → | xyz |

Document data T

(c)

Index information S'

Global document ID → | 11xyz |

Document data T

(d)

Index information S'

Global document ID  Document ID
↓ ↓
| 11xyz | xyz | |

Document data T

# FIG.4

For several years, Mrs. H. T. Miller had lived alone in a pleasant apartment (two rooms with kitchenette) in a remodelled brown stone near the East River. She was a widow: Mr. H. T. Miller had left a reasonable amount of, and she rarely were narrow, she had no friends to speak of, and she rarely journeyed farther than the corner grocery. The other people in the house never seemed to notice her: her clothes were matter-of-fact, her hair iron-gray, clipped and casually waved; she did not use cosmetics, her features were plain and inconspicuous, and on her last birthday she was sixty-one. Her activities were seldom spontaneous: she kept the two rooms immaculate, smoked an occasional cigarette, prepared her own meals and tended a canary.

Then she met Miriam. It was snowing that night. Mrs. Miller had finished drying the supper dishes and was thumbing through an afternoon paper when she saw an advertisement of a picture playing at a neighbourhood theatre. The title sounded good, so she struggled into her beaver coat, laced her galoshes and left the apartment, leaving one light burning in the foyer: she found nothing more disturbing than a sensation of darkness.

The snow was fine, falling gently, not yet making an impression on the pavement. The wind from the river cut only at street crossings. Mrs. Miller hurried, her head bowed, oblivious as a mole burrowing a blind path. She stopped at a drugstore and bought a package of peppermints.

A long line stretched in front of the box office; she took her place at the end. There would be (a tired voice groaned) a short wait for all seats. Mrs. Miller rummaged in her leather handbag till she collected exactly the correct change for admission. The line seemed to be taking its own time and, looking around for some distraction, she suddenly became conscious of a little girl standing under the edge of the marquee.

Her hair was the longest and strangest Mrs. Miller had ever seen: absolutely silver-white, like an albino's. It flowed waist length in smooth, loose lines. She was thin and fragilely constructed. There was a simple, special elegance in the way she stood with her thumbs in the pockets of a tailor plum-velvet coat.

Mrs. Miller felt oddly excited, and when the little girl glanced toward her, she smiled warmly. The little girl walked over and said, "Would you care to do me a favour?"

Document ID

Document ID mark

C: Document-ID-markded sheet

# FIG.5

200: Digital integrated apparatus
220: Personal computer
300: Scanner
400: Internet-fax device
401: Transfer-instruction means
500: Shared personal computer
501: Document preparation software
502: Document management software
210: Shared personal computer
C: Document-ID-marked sheet
103: Code reader
600: Document server
1100: Document transfer device
1120: Document-ID-attachment means
1180: Posting means
1190: Document management table
310: Printer
510: Personal computer
511: Document preparation software
512: Document management software
410: Internet-fax machine
Digital integrated apparatus

# FIG.6

Digital integrated apparatus — 200

Shared personal computer — 210

Personal computer — 220

Document transfer device — 1100

Database — 601

600 : Document server

# FIG.7

Document server

600

Document transfer device

1100

701

Document transfer server

700

Digital integrated apparatus

# FIG.8

EP 1 063 598 A2

# FIG.9

Digital integrated apparatus — 200

Document transfer device — 1100

Document server — 600

Client — 800

C:Document-ID-marked sheet

C:Document-ID-marked sheet

# FIG.10

EP 1 063 598 A2

Digital integrated apparatus `700`

C : Document-ID-marked sheet

Code reader `103`

Document transfer device `1100`

Shared personal computer `500`

# FIG.11

EP 1 063 598 A2

Digital integrated apparatus ——→ Document transfer server

700

701

C:Document-ID-marked sheet

C:Document-ID-marked sheet

Document transfer device

1100

Digital integrated apparatus ——→ Shared personal computer

200

210

EP 1 063 598 A2

# FIG.12

C: Document-ID-marked sheet

```
┌──────────────────────┐         ┌──────────────────────┐
│ Digital integrated   │ ──────> │ Document             │
│ apparatus            │ <────── │ transfer device      │
└──────────────────────┘         └──────────────────────┘
          200                              100
                                            │
                                            ↕
                                  ┌──────────────────────┐
                                  │ Document server      │
                                  └──────────────────────┘
                                      600
```

FIG.13

EP 1 063 598 A2

**FIG.14**

Digital integrated apparatus 50 → Shared personal computer 60 → Personal computer 70 → M

Shared personal computer 65 → Personal computer 76

Personal computer 75 → M

M → M

EP 1 063 598 A2

# FIG.15

# FIG.16

EP 1 063 598 A2

# FIG.17

EP 1 063 598 A2

✉ STORAGE-COMPLETION NOTICE - MESSAGE (text.)

| FILE(F) | EDIT(E) | VIEW(V) | INSERT(I) | TOOL(T) | ACTION(A) | HELP(H) |

RETURN(R)   ALL RETURN(A)   FORWARD(F)

TRANSMISSION DATE & TIME: 00/05/23(TUE) 8:15

SUBJECT(J): STORAGE-COMPLETION NOTICE

http://...........25001973.html

1811

# FIG.18

☑ STORAGE-COMPLETION NOTICE – MESSAGE (text)

FILE(F)　EDIT(E)　VIEW(V)　INSERT(I)　TOOL(T)　ACTION(A)　HELP(H)

RETURN(R)　ALL RETURN(A)　FORWARD(F)

TRANSMISSION DATE & TIME: 00/05/23(TUE) 8:17

SUBJECT(J): STORAGE-COMPLETION NOTICE

http://..............25001973.html

Document name : Minutes
Storage date & time : May 18, 2000 11: 30

http://..............58000479.html

Document name : Proposal
Storage date & time : May 22, 2000 17: 24

http://..............011129824.html

Document name : Travel Repot
Storage date & time : May 22, 2000 23:19

1182

1183

1184

# FIG.19

21 : Corresponding table

| Group ID information | Storage folder |
|---|---|
| E-mail address of the group A | Folder A |
| Facsimile number of the group A | Folder A |
| Group ID "A" | Folder A |
| E-mail address of the group B | Folder B |
| Facsimile number of the group B | Folder B |
| Group ID "B" | Folder B |
| E-mail address of the Group C | Folder C |
| Facsimile number of the group C | Folder C |
| Group ID "C" | Folder C |